(19) Europäisches Patentamt
European Patent Office
Office européen des brevets

(11) **EP 2 977 231 B1**

(12) **EUROPEAN PATENT SPECIFICATION**

(45) Date of publication and mention
of the grant of the patent:
**05.07.2017 Bulletin 2017/27**

(21) Application number: **14768635.6**

(22) Date of filing: **05.03.2014**

(51) Int Cl.:
**B60C 11/16** (2006.01)

(86) International application number:
**PCT/JP2014/055664**

(87) International publication number:
**WO 2014/148262 (25.09.2014 Gazette 2014/39)**

(54) **STUD PIN AND TIRE USING SAME**

SPIKESTIFT UND REIFEN DAMIT

TIGE DE CRAMPON ET PNEU UTILISANT CETTE DERNIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2013 JP 2013057247**

(43) Date of publication of application:
**27.01.2016 Bulletin 2016/04**

(73) Proprietor: **Bridgestone Corporation
Tokyo 104-8340 (JP)**

(72) Inventors:
• **SAWADA Hiroki
Kodaira-shi
Tokyo 187-0031 (JP)**
• **KAWAMATA Satoru
Kodaira-shi
Tokyo 187-0031 (JP)**
• **WATANABE Yuki
Kodaira-shi
Tokyo 187-0031 (JP)**
• **ITO Tomoaki
Kodaira-shi
Tokyo 187-0031 (JP)**

(74) Representative: **Oxley, Robin John George
Marks & Clerk LLP
90 Long Acre
London WC2E 9RA (GB)**

(56) References cited:
| | |
|---|---|
| EP-A1- 1 199 193 | WO-A1-2005/049341 |
| WO-A1-2012/004452 | WO-A1-2013/014900 |
| WO-A1-2014/027146 | FI-A- 68 863 |
| JP-A- S6 220 705 | JP-A- H01 502 178 |
| JP-A- S61 282 103 | JP-A- 2000 158 917 |
| JP-A- 2002 120 517 | JP-A- 2010 070 052 |
| US-A1- 2004 231 775 | |

EP 2 977 231 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a stud pin and a tire using the stud pin. More particularly, the present invention relates to a stud pin for a studdable tire that is suitable particularly for traveling on icy and snowy road surfaces, and a studdable tire using the same.

BACKGROUND ART

Conventionally, mainly as winter tires, studdable tires comprising metal stud pins arranged on the tread surface are known. The stud pins used in such studdable tires generally comprise a pin portion protruding from the tread surface and a main body part embedded in the tread. During traveling, the pin portion protruding from the tread surface bites into the road surface to improve the frictional force between the road surface and the tire, and this enables to ensure maneuvering stability on icy and snowy road surfaces.

As an improved technology relating to a stud pin, for example, Patent Document 1 discloses a spike for vehicle tire which comprises, in a plan view: a non-round elongated plate-form spike root whose longest elongated part defines a longitudinal axis thereof; and a non-round elongated spike upper part whose longest elongated part defines a longitudinal axis thereof, wherein the spike root and the spike upper part intersect with each other and the longitudinal axis of the spike root and the longitudinal axis of the spike upper part form an angle different from zero. The edge surfaces of conventional stud pins are generally flat or round-shaped with slight bulging and constituted by a single continuous surface without any notch or the like. WO2012/004452 discloses a stud having at least two hard-material tips fitted into the recess of the upper dome of the stud. WO2005/049341 teaches a spike for a tire tread wherein a portion of the member introduced into the tread is at least partly conical or truncated. EP1199193 relates to a spike for a vehicle tire having a noncircular elongate base plate. US2004/0231775 discloses anti-slip studs orientated so that one of the diagonal dimensions of the hard cermet piece is located in the rolling direction or forms an angle with respect to the rolling direction. FI 68 863 A shows a grooved spike pin.

RELATED ART DOCUMENT

PATENT DOCUMENT

Patent Document 1: Japanese Patent No. 4088055 (Japanese Unexamined Patent Application Publication No. 2002-120517)

SUMMARY OF THE INVENTION

PROBLEMS TO BE SOLVED BY THE INVENTION

In a studdable tire, in addition to driving and braking performances on icy and snowy road surfaces, stud-off resistance (performance for inhibiting detachment of a stud pin) is important. Accordingly, various stud pin shapes and conditions for stud pin arrangement on a tire have been examined; however, as in the case of, for example, the technology disclosed in the Patent Document 1 where "stud-off' is believed to be likely to occur due to road surface input caused by collapse of the spike root in the minor axis direction, a satisfactory technology is yet to be provided. Thus, it has been desired to realize a stud pin and a tire using the stud pin that can satisfy the above-described required performances at higher levels. In view of this, an object of the present invention is to provide a stud pin and a tire using the stud pin, which exhibit improved driving and braking performances on icy and snowy road surfaces as well as improved stud-off resistance.

MEANS FOR SOLVING THE PROBLEMS

In order to solve the above-described problems, the stud pin of the present invention is a stud pin for a tire which is arranged on the surface of a tire tread, the stud pin being characterized by comprising: a body part which is embedded in the tire tread; and a pin portion which is arranged in a protruding manner on one end of the body part and protrudes from the surface of the tire tread, the body part comprising: a main body part formed on the side of the end on which the pin portion is arranged in a protruding manner; and a flange portion formed on the opposite side of the end on which the pin portion is arranged in a protruding manner, wherein, in a cross-section perpendicular to the axial direction of the stud pin, the main body part assumes a line-symmetrical shape having two symmetry axes A and B that

2

are perpendicular to each other and the flange portion assumes a line-symmetrical shape having at least one symmetry axis; when a symmetry axis of the flange portion that represents a maximum length of the flange portion in the axial direction is defined as longitudinal symmetry axis C, the maximum length of the flange portion in the direction perpendicular to the longitudinal symmetry axis C is shorter than the length of the flange portion along the longitudinal symmetry axis C; and when the lengths of the main body part on the symmetry axes A and B of the main body part are defined as La and Lb, respectively, the symmetry axis A satisfying La ≥ Lb and the longitudinal symmetry axis C of the flange portion are in substantially the same direction, characterised in that, on the end surface of said pin portion in said axial direction of said stud pin at least one groove running thereacross is formed.

Further, the tire of the present invention is characterized by comprising the above-described stud pin of the present invention arranged on tread land portions.

EFFECTS OF THE INVENTION

According to the present invention, by adopting the above-described constitutions, particularly, driving and braking performances can be improved while maintaining or reducing the total weight of the stud pin, and a stud pin and a tire using the stud pin, which exhibit improved driving and braking performances on icy and snowy road surfaces as well as improved stud-off resistance, can thereby be realized.

BRIEF DESCRIPTION OF THE DRAWINGS

Fig. 1 provides drawings illustrating one example of the stud pin of the present invention.
Fig. 2 provides schematic cross-sectional views showing specific examples of the cross-sectional shape of the flange portion according to the present invention.
Fig. 3 provides schematic cross-sectional views showing specific examples of the cross-sectional shape of the main body part according to the present invention.
Fig. 4 provides top views showing another examples of the stud pin of the present invention.
Fig. 5 provides schematic cross-sectional views showing specific examples of the cross-sectional shape of the pin portion according to the present invention.
Fig. 6 provides drawings illustrating a specific example of the structure of the connecting part between the body part and the pin portion in the stud pin of the present invention.
Fig. 7 is a partial development view showing the tread surface of one example of the tire of the present invention.
Fig. 8 is a schematic partial development view showing the tread surface of another example of the tire of the present invention.
Fig. 9 provides drawings illustrating the hole-forming conditions in another example of the stud pin of the present invention.
Fig. 10 is a schematic partial development view showing the tread surface of yet another example of the tire of the present invention.
Fig. 11 is a schematic partial development view showing the tread surface of yet another example of the tire of the present invention.
Fig. 12 provides schematic cross-sectional views showing the shapes of the flange portion, main body part and pin portion according to Comparative Example.

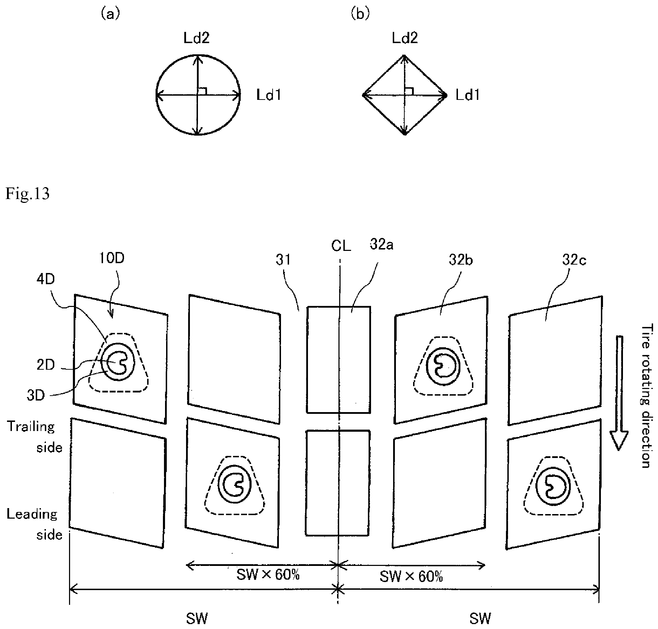

Fig. 13 is a schematic partial development view showing the tread surface of still yet another example of the tire of the present invention.

MODE FOR CARRYING OUT THE INVENTION

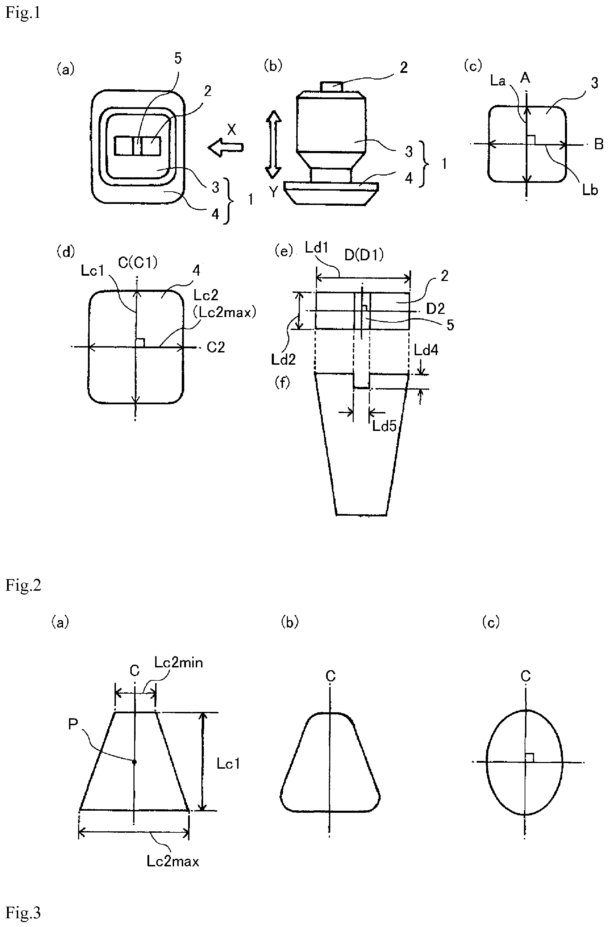

Embodiments of the present invention will now be described in detail referring to the drawings.
The present invention relates to an improvement of a tire stud pin which is arranged on the tire tread surface. In Fig. 1, (a) is a top view showing one example of the stud pin of the present invention; (b) is a side view taken from the direction of X shown in (a); (c) is a cross-sectional view of the main body part; (d) is a cross-sectional view of the flange portion; and (e) and (f) are top and side views of the pin portion, respectively. As shown in these drawings, the stud pin of the present invention comprises: a body part 1, which is embedded in a tire tread; and a pin portion 2, which is arranged in a protruding manner on one end of the body part 1 and protrudes from the surface of the tire tread. The body part 1 comprises: a main body part 3, which is formed on the side of the end on which the pin portion 2 is arranged in a protruding manner; and a flange portion 4, which is formed on the opposite side of the end on which the pin portion 2 is arranged in a protruding manner.

In the present invention, in a cross-section perpendicular to the axial direction Y of the stud pin, the main body part 3 assumes a line-symmetrical shape having two symmetry axes A and B that are perpendicular to each other (see Fig. 1(c)). In the present invention, the flange portion 4 also assumes a line-symmetrical shape having at least one symmetry axis and, in the example shown in Fig. 1, the flange portion 4 is in a line-symmetrical shape having two symmetry axes C1 and C2 that are perpendicular to each other. When, one of these symmetry axes that has the maximum length of the flange portion 4 in the axial direction, which is the symmetry axis C1 having a length of Lc1 (> Lc2) in Fig. 1, is defined as "longitudinal symmetry axis C", the maximum length of the flange portion 4 in the direction perpendicular to the longitudinal symmetry axis C, Lc2max (= Lc2), is shorter than the length Lc1 of the flange portion 4 along the longitudinal symmetry axis C (see Fig. 1(d)).

Further, in the present invention, when the lengths of the main body part 3 on the symmetry axes A and B are defined as "La" and "Lb", respectively, the symmetry axis A satisfying La ≥ Lb and the longitudinal symmetry axis C of the flange portion 4 are in substantially the same direction (see Fig. 1(a): in this case, La = Lb). The expression "the symmetry axis A of the main body part 3 and the longitudinal symmetry axis C of the flange portion 4 are in substantially the same direction" encompasses a case where the direction of the symmetry axis A and that of the longitudinal symmetry axis C are the same and means that manufacturing errors are allowed. Specifically, it means that the angle formed by the symmetry axis A and the longitudinal symmetry axis C is within ± 10°, particularly within ± 5°.

"Stud-off", that is, detachment of the stud pin occurs during acceleration start or braking of a vehicle. In the present invention, first, by allowing the flange portion 4 to have a shape satisfying the above-described conditions, when the stud pin is arranged on a tire such that the longitudinal symmetry axis C of the flange portion 4 is aligned with the tire circumferential direction, the flange portion 4 is made likely to be hooked in the tire, so that the stud-off resistance is improved. In this case, the direction perpendicular to the longitudinal symmetry axis C of the flange portion 4 is consequently aligned with the tire width direction; however, the force applied in the tire width direction during turning of a vehicle is considerably smaller than the force generated in the tire circumferential direction during acceleration start or braking. Thus, the force acting in the tire width direction is unlikely to cause stud-off. Rather, by shortening the length of the flange portion 4 along the tire width direction, the stud pin is slightly inclined and thereby allowed to bite into the road surface during turning, which is advantageous in terms of the turning performance. Here, many countries apply weight restrictions on stud pins; however, the present invention is also advantageous in that an increase in the weight due to an increase in the cross-sectional length of the flange portion 4 in the direction of the longitudinal symmetry axis C can be offset by shortening the cross-sectional length in the direction perpendicular thereto.

Further, in the present invention, by allowing the main body part 3 to have a shape satisfying the above-described conditions, when the stud pin is arranged on a tire such that the longitudinal symmetry axis C of the flange portion 4 is aligned with the tire circumferential direction, the symmetry axis A of the main body part 3, which is substantially the same as the direction of the longitudinal symmetry axis C, is also aligned with the tire circumferential direction. The edge portion of the main body part 3 exerts edge effects by coming into contact with the road surface and, since the main body part 3 is formed such that its length on the symmetry axis A is the same or longer than that of the symmetry axis B perpendicular thereto, the edge portion of the main body part is arranged away from the central axis in the tire circumferential direction. This allows a large moment to be applied, and the edge effects are thereby enhanced and an effect of improving the on-ice performances is attained.

Fig. 2 shows other specific examples of the cross-sectional shape of the flange portion according to the present invention. In the present invention, in addition to such a substantially rectangular shape with rounded corners as shown in Fig. 1, specific examples of the cross-sectional shape of the flange portion 4 also include a trapezoidal shape shown in Fig. 2(a), a substantially trapezoidal shape with rounded corners shown in Fig. 2(b), an elliptical shape shown in Fig. 2(c), and a rectangular shape (not shown). Thereamong, Figs. 1 and 2(c) represent shapes having two symmetry axes, while Figs. 2(a) and 2(b) represent shapes having one symmetry axis. Particularly, in the present invention, it is preferred that the cross-sectional shape of the flange portion 4 be one with directionality that has only the longitudinal symmetry axis C as a symmetry axis, in which the parts of the flange portion 4 in the direction perpendicular to the longitudinal symmetry axis C that correspond to the maximum length Lc2max and the minimum length Lc2min are each positioned on the opposite sides with respect to the midpoint P of the length of the flange portion 4 on the longitudinal symmetry axis C. By this, an effect of improving the stud-off resistance as well as the driving and braking performances can be obtained without a large increase in the body weight of the stud pin.

In the present invention, it is preferred that the length of the flange portion 4 on the longitudinal symmetry axis C, Lc1, and the maximum length of the flange portion 4 in the direction perpendicular to the longitudinal symmetry axis C, Lc2max, satisfy the relationship represented by the following formula:

$$1.0 < Lc1/Lc2max \leq 1.5.$$

When Lc1/Lc2max = 1.0, the flange portion 4 has an isotropic cross-sectional shape that is conventionally common and thus does not satisfy the requirements of the present invention, so that a stud-off resistance-improving effect cannot be obtained. Meanwhile, when 1.5 < Lc1/Lc2max, the stud-off resistance during periods when a driving force is in action, such as the starting and accelerating periods, is improved substantially proportionally to the increase in the Lc1 value; however, since the value of Lc2max is too small, the stud-off resistance during periods when a lateral force is in action is deteriorated, making the overall merit small.

In the present invention, in cases where the length of the flange portion 4 in the direction perpendicular to the longitudinal symmetry axis C has maximum and minimum values, it is preferred that these maximum and minimum values, Lc2max and Lc2min, satisfy the relationship represented by the following formula:

$$1.0 < Lc2max/Lc2min \leq 2.0.$$

When 2.0 < Lc2max/Lc2min, since the minimum value of the length of the flange portion 4, Lc2min, is relatively too small, the flange tip of this narrow and pointed side repeatedly penetrates into the tread block, which may consequently impair the stud-off resistance due to early breakdown of the rubber.

Fig. 3 shows other specific examples of the cross-sectional shape of the main body part according to the present invention. In the present invention, in addition to such a substantially square shape with rounded corners as shown in Fig. 1, specific examples of the cross-sectional shape of the main body part 3 also include a substantially rectangular shape with rounded corners shown in Fig. 3(a) and an elliptical shape shown in Fig. 3(b) as well as square and rectangular shapes (not shown). Thereamong, Fig. 1 shows a case of La = Lb, and Figs. 3(a) and (b) each show a case of La > Lb.

In the present invention, it is preferred that the length of the main body part 3 on the symmetry axis A, La, and the length of the main body part 3 on the symmetry axis B, Lb, satisfy the relationship represented by the following formula:

$$1.0 \leq La/Lb \leq 1.5.$$

When 1.5 < La/Lb, the stud-off resistance during periods when a driving force is in action, such as the starting and accelerating periods, is improved substantially proportionally to the increase in the La value; however, since the value of Lb is too small, the contact pressure with the tread block rubber is reduced and the stud-off resistance during periods when a lateral force is in action is deteriorated, making the overall merit small.

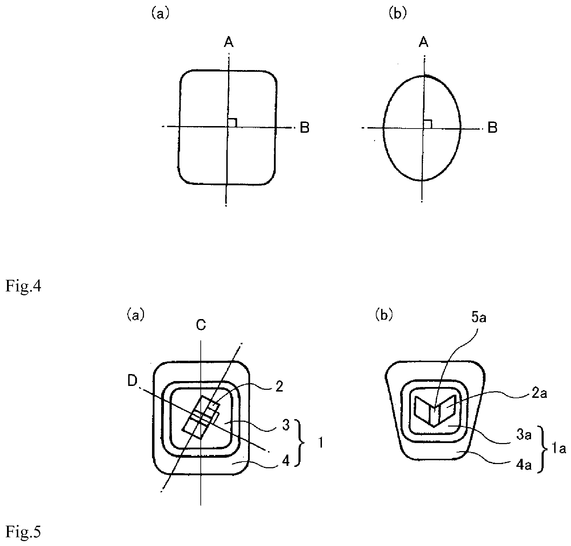

In the present invention, as shown in Fig. 1, in a cross-section perpendicular to the axial direction of the stud pin, the pin portion 2 assumes a line-symmetrical shape having at least one symmetry axis (in the example shown in Fig. 1, two symmetry axes D1 and D2 that are perpendicular to each other) and, when one of these symmetry axes that represents the maximum length of the pin portion 2 projected in the directions of the symmetry axes, which is the symmetry axis D1 having a length of Ld1 (> Ld2) in Fig. 1, is defined as "symmetry axis D", it is preferred that the direction perpendicular to the symmetry axis D of the pin portion 2 and the direction of the longitudinal symmetry axis C of the flange portion 4 intersect with each other. The expression "the direction perpendicular to the symmetry axis D and the direction of the longitudinal symmetry axis C intersect with each other" used herein means that the angle formed by the direction perpendicular to the symmetry axis D and the direction of the longitudinal symmetry axis C is at least larger than 0° and smaller than 180°, preferably 50° to 130°, more preferably 90° $\pm$ 25°, and it is most preferred that the direction perpendicular to the symmetry axis D and the direction of the longitudinal symmetry axis C be perpendicular to each other. Fig. 4(a) shows other examples of the stud pin of the present invention in which the angles formed by the direction perpendicular to the symmetry axis D and the direction of the longitudinal symmetry axis C are different.

By allowing the pin portion 2 to have a shape satisfying the above-described conditions, when the stud pin is arranged on a tire such that the longitudinal symmetry axis C of the flange portion 4 is aligned with the tire circumferential direction, the direction perpendicular to the symmetry axis D of the pin portion 2, which intersects with the direction of the longitudinal symmetry axis C, also intersects with the tire circumferential direction. In the present invention, since the pin portion 2 has a maximum projected length along the direction perpendicular to the symmetry axis D, by allowing the direction of the maximum projected length of the pin portion 2 to intersect with the tire circumferential direction, preferably to be aligned with the tire width direction, the edge effects of the pin portion 2 are further improved and ice powder scraped by the pin portion 2 are efficiently discharged.

Fig. 5 shows other specific examples of the cross-sectional shape of the pin portion according to the present invention. In the present invention, in addition to such a rectangular shape as shown in Fig. 1, specific examples of the cross-sectional shape of the pin portion 2 also include a (reverse) V-shape shown in Fig. 5(a), a circular arc shape shown in Fig. 5(b), a modified circular arc shape with slightly curved and rounded corners as shown in Fig. 5(c), an elliptical shape shown in Fig. 5(d), a modified elliptical shape formed by a combination of circular arcs or elliptical arcs as shown in Fig. 5(e), an isosceles triangular shape shown in Fig. 5(f), a semi-elliptical shape shown in Fig. 5(g), a round dumbbell shape shown in Fig. 5(h), a polygonal dumbbell shape shown in Fig. 5(i), and a chevron shape shown in Fig. 5(j). Thereamong, in the present invention, it is preferred that the pin portion 2 have such a cross-sectional shape as shown in any of Figs. 5(a) to (c) and (j), which is a shape with directionality that has only one symmetry axis D and a recess 2A on one side in the direction of the symmetry axis D, or such a cross-sectional shape as shown in any of Figs. 5(e) to (g) in which the part corresponding to the maximum projected length Ld1 in the direction along the symmetry axis D offset from the midpoint of the projected length Ld2 in the direction perpendicular to the symmetry axis D. By this, a braking performance-improving effect can be attained. Fig. 4(b) is a top view showing other example of the stud pin of the present invention in which a flange portion 4a having the substantially trapezoidal shape shown in Fig. 2(b), a main body part 3a having the same substantially square shape as shown in Fig. 1 and a pin portion 2a having the chevron shape shown in Fig. 5(j) are employed.

In the present invention, it is preferred that the maximum projected length of the pin portion 2, Ld1, and the projected length in the direction perpendicular thereto, Ld2, satisfy the relationship represented by the following formula:

$$1.0 < \text{Ld1/Ld2} \leq 3.0, \text{ particularly } 1.2 \leq \text{Ld1/Ld2} \leq 3.0.$$

When Ld1/Ld2 < 1.2, a clear advantage in the braking performance cannot be attained in comparison to a conventionally common isotropic cross-sectional pin shape. Meanwhile, when 3.0 < Ld1/Ld2, with the weight of the stud pin being the same, a reduction in the rigidity due to insufficient thickness may deteriorate the resistance to pin breakage, which leads to reduction in the braking performance.

Further, in the present invention, when the pin portion 2 has such a directional cross-sectional shape as shown in any of Figs. 5(a) to (c) and (j) that has a recess 2A on one side in the direction of the symmetry axis D, it is preferred that the length of this recess 2A along the direction of the symmetry axis D, Ld3, and the maximum projection length of the pin portion 2, Ld1, satisfy the relationship represented by the following formula:

$$0.1 \leq \text{Ld3/Ld1} \leq 0.4.$$

When Ld3/Ld1 < 0.1, as compared to a case where the cross-section of the pin portion does not have the recess 2A (Ld3 = 0), a sufficient advantage cannot be obtained in the improvement of the braking performance. Meanwhile, when 0.4 < Ld3/Ld1, since the recess 2A is too deep, with the weight of the stud pin being the same, a reduction in the rigidity due to insufficient thickness may deteriorate the resistance to pin breakage, which leads to reduction in the braking performance.

As shown in Figs. 1 and 4, in the present invention, on the end surface of the pin portion 2 or 2a in the axial direction of the stud pin, a groove 5 or 5a running across the end surface is formed. By arranging the groove on the pin portion particularly such that the extending direction of the groove is aligned with the tire circumferential direction when the stud pin is arranged on a tire tread block, during slipping of the tire on the road surface, ice powder scratched and scraped by the tip of the pin portion are likely to be drawn through the groove without being retained and thereby discharged to the back, which is preferred. Such an expected effect is attained by arranging at least one groove, and it is preferred that one to three grooves be arranged. When 4 or more grooves are arranged, since the area of the end surface of the pin portion per land portion is too small, a reduction in the rigidity may deteriorate the resistance to pin breakage, which leads to reduction in the braking performance.

In this case, it is preferred that the depth of the groove 5, Ld4, and the maximum projected length of the pin portion 2, Ld1, satisfy the relationship represented by the following formula:

$$0.15 \leq \text{Ld4/Ld1} \leq 0.5.$$

When Ld4/Ld1 < 0.15, as compared to a conventionally common case where no groove is arranged on the surface of the pin portion, a sufficient advantage cannot be obtained in the improvement of the braking performance. Meanwhile, when 0.5 < Ld4/Ld1, since the groove is too deep and the rigidity of the surface land part of the pin portion is thus reduced, the resistance to pin breakage is deteriorated and this may lead to reduction in the braking performance.

Further, it is preferred that the width of the groove 5 measured in the direction perpendicular to its extending direction, Ld5, and the maximum projected length of the pin portion 2, Ld1, satisfy the relationship represented by the following formula:

$$0.15 \leq \text{Ld5/Ld1} \leq 0.5.$$

When Ld5/Ld1 < 0.15, since the width of the groove 5 is too narrow, the edge effects may not be sufficiently expressed when the pin is dragged on ice. Consequently, as compared to a conventionally common case where no groove is arranged, a clear advantage cannot be obtained in the performance improvement. Meanwhile, when 0.5 < Ld5/Ld1, the surface land part of the pin portion is too small and the strength thereof is thus insufficient. Consequently, breakage of the pin portion (the upper edge land part) is likely to occur not only when the pin is dragged on ice, but also during normal traveling on a dry road surface. When the edge length of the pin portion is reduced due to such breakage of the pin, an advantage in the on-ice braking performance can no longer be obtained, which is not preferred.

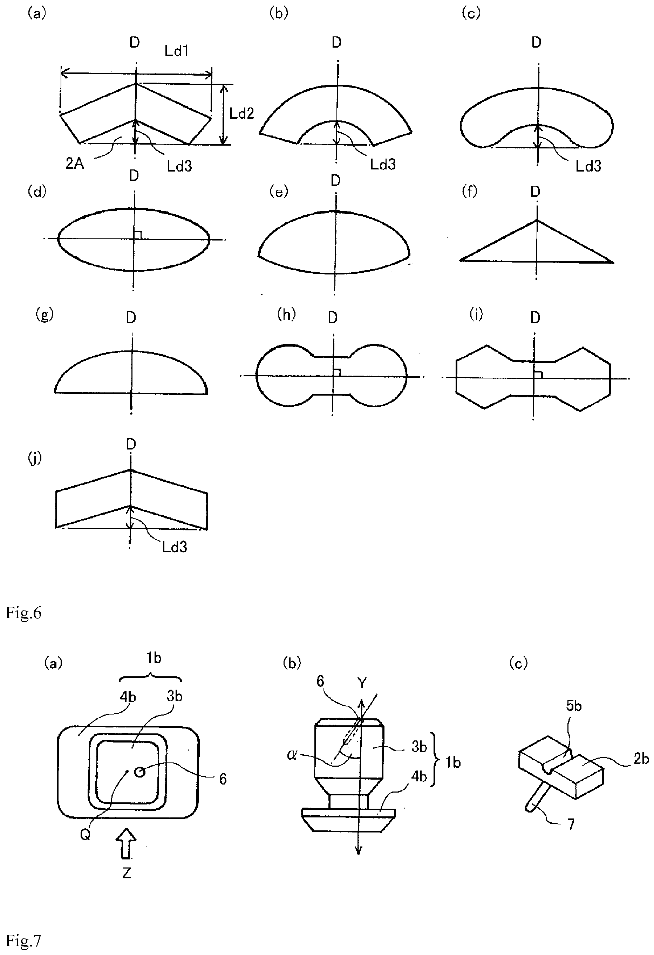

Fig. 6 shows a specific example of the structure of the connecting part between the body part and the pin portion in the stud pin of the present invention. Fig. 6(a) is a top view of a body part 1b; Fig. 6(b) is a side view of the body part 1b taken from the direction of Z shown in (a); and Fig. 6(c) is a perspective view of a pin portion 2b. As shown in these figures, in the present invention, a stud pin can be produced by preparing the body part 1b and the pin portion 2b separately and then assembling them by, for example, fitting the pin portion 2b into a hole 6 arranged on a main body part 3b. In this case, the hole into which the pin portion is fitted may be formed such that its opening is arranged at the same position as the central axis Q of the main body part 3b; however, as shown in the figures, it is preferred that the hole be formed such that its opening is positioned offset from the central axis Q of the main body part 3b. This allows the stud pin to effectively cope with the force generated in the tire circumferential direction during acceleration start or braking of the vehicle, so that the on-ice performances and the stud-off resistance can be improved. In this case, it is more effective to control the hole-forming position to be offset in the opposite directions in the central part where a force is applied in the tire traveling direction during acceleration start and in the shoulder part where a force is applied in the direction opposite to the tire traveling direction during braking.

The hole 6 into which the pin portion is fitted may be formed in parallel to the axial direction of the stud pin; however, as shown in the figures, it is preferred that the hole be formed in a direction inclined with respect to the stud pin axis. In this case as well, in the same manner as described above, the stud pin is enabled to effectively cope with the force generated in the tire circumferential direction during acceleration start or braking of the vehicle, so that the on-ice performances and the stud-off resistance can be improved. However, in cases where the hole 6 is formed in an inclined direction, as shown in the figures, it is required that an insertion part 7 for the hole 6 into which the pin portion 2b is inserted be also formed in an inclined direction; therefore, there is a drawback in that the difficulty of mold withdrawing in the production of the pin portion is increased. Here, as for the inclined direction of the hole 6, the angle $\alpha$ formed by the direction of the hole 6 and the axial direction Y of the stud pin can be, for example, within $\pm$ 20°, particularly 3° to 15°. As shown in Fig. 1(f), it is also preferred that the pin portion 2 have such a shape of a cross-section through the stud pin axis and the symmetry axis D that tapers in the depth direction of the pin inserted into the hole. In this case, the cross-sectional shape of the pin portion 2 that is perpendicular to the axial direction of the stud pin is substantially the same at any position in the axial direction of the stud pin. Also for other specific examples of the pin portion that are shown in Figs. 5(a) to (j), in the same manner, the pin portion can have either such a tapering shape as shown in Fig. 1(f) or such a shape as shown in Fig. 6(c) that has the insertion part 7.

In the stud pin of the present invention, the pin portion and the body part may be formed from different materials, or the entirety of the stud pin of the present invention can be formed from the same material.

The tire of the present invention is characterized in that the above-described stud pin of the present invention is arranged on the tread land portions, and this constitution enables to achieve good driving and braking performances on icy and snowy road surfaces as well as good stud-off resistance. Fig. 7 is a partial development view showing the tread surface of one example of the tire of the present invention. On the tread surface of the tire shown in this figure, land portions 22a to 22c, which are each defined by plural grooves 21, are formed in plural rows, and stud pins 10 are arranged at an appropriate pitch on each of the land portions 22b and 22c. In the tire of the present invention, the tread pattern formed on the tire surface and the arrangement pattern of the stud pin are not particularly restricted and, as desired, they can be appropriately designed based on the required performances.

In the tire of the present invention, as described above, it is preferred that the stud pin be arranged on the tread blocks such that the longitudinal symmetry axis C of the flange portion 4 is aligned with the tire circumferential direction. This makes the flange portion 4 more likely to be hooked in the tread blocks, so that the stud-off resistance can be improved. Further, in the tire of the present invention, it is also preferred that the stud pin be arranged on the tread blocks such that the direction of the symmetry axis D of the pin portion 2 is aligned with the tire circumferential direction. By this, the on-ice performances can be improved.

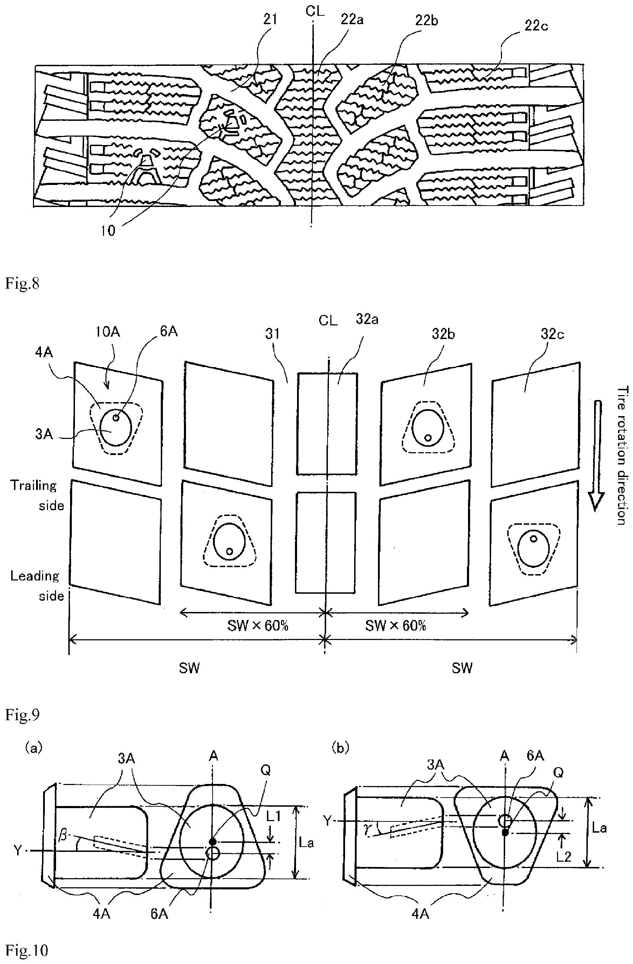

Fig. 8 is a schematic partial development view showing the tread surface of another example of the tire of the present invention. On the tread surface of the tire shown in this figure, land portions 32a to 32c, which are each defined by plural grooves 31, are formed in plural rows, and stud pins 10A, whose flange portion 4A has directionality, are arranged at an appropriate pitch on each of the land portions 32b and 32c. In the present invention, in cases where such a stud pin whose flange portion has directionality is used, as shown in the figure, those stud pins in the region of less than 60% of the half-width SW of the tire-ground contact width from the tire equatorial plane CL are preferably arranged on the tread blocks in such a manner that the side of the flange portion 4A having the maximum length, Lc2max, faces the leading side of the blocks. Meanwhile, those stud pins arranged in the region away from the tire equatorial plane CL by 60% or more of the half-width SW of the tire-ground contact width are preferably arranged on the tread blocks in such a manner that the side of the flange portion 4A having the maximum length, Lc2max, faces the trailing side of the blocks. By this, the effects of such stud pin arrangement can be favorably obtained during both periods of acceleration start and braking.

Figs. 9(a) and (b) are drawings that illustrate the hole-forming conditions in another example of the stud pin of the present invention. In the present invention, as described above, when the hole into which the pin portion of the stud pin is fitted is formed at a position offset from the central axis Q of the main body part, it is preferred that the hole-forming position be offset in the opposite directions in the central part where a force is applied in the tire traveling direction during acceleration start and in the shoulder part where a force is applied in the direction opposite to the tire traveling direction during braking. Specifically, as shown in the figures, in those stud pins that are arranged in the region of less than 60% of the half-width SW of the tire-ground contact width from the tire equatorial plane CL, it is preferred that the hole-forming position be offset from the central axis Q of main body part 3A toward the leading side by a distance of L1 (Fig. 9(a)). Meanwhile, in those stud pins that are arranged in the region away from the tire equatorial plane CL by 60% or more of the half-width SW of the tire-ground contact width, it is preferred that the hole-forming position be offset from the central axis Q of the main body part 3A toward the trailing side by a distance of L2 (Fig. 9(b)). In this manner, by using a single type of stud pin and changing the hole-forming position in accordance with the location in the tire width direction, the driving and braking performances and the stud-off resistance can all be attained at high levels.

In this case, it is preferred that each of the distances, L1 and L2, and the length of the main body part, La, satisfy the relationship represented by the following Formula:

$$0.05 \le L1/La \le 0.25,\ 0.05 \le L2/La \le 0.25.$$

When L1/La < 0.05, as compared to a conventionally common case where the pin portion is arranged in the center of the main body part (L1 = 0), a clear advantage cannot be obtained in terms of the driving performance. Further, when L2/La < 0.05, as compared to a conventionally common case where the pin portion is arranged in the center of the main body part (L2 = 0), a clear advantage cannot be obtained in terms of the braking performance. Meanwhile, when 0.25 < (L1, L2)/La, since the arrangement position of the pin portion is too close to the edge of the main body part, due to abrasion of the edge of the main body part caused by repeated contact with the ground, the stud-off resistance, which is the durability against detachment of the pin portion, is deteriorated.

Further, in the present invention, in cases where the hole is formed inclined, as shown in the figures, for those stud pins that are arranged in the region of less than 60% of the half-width SW of the tire-ground contact width from the tire equatorial plane CL, it is preferred that the direction of forming a hole 6A be inclined such that its opening is offset toward the leading side, specifically at an angle β with respect to the axial direction Y of the stud pin (Fig. 9(a)). Meanwhile, for those stud pins that are arranged in the region away from the tire equatorial plane CL by 60% or more of the half-width SW of the tire-ground contact width, it is preferred that the direction of forming the hole 6A be inclined such that its opening is offset toward the trailing side, specifically at an angle γ with respect to the axial direction Y of the stud pin (Fig. 9(b)). In this manner, by using a single type of stud pin and changing the hole-forming direction in accordance with the location in the tire width direction, the driving and braking performances and the stud-off resistance can all be attained at high levels.

In this case, it is preferred that the angles β and γ satisfy the following relationships: $3° \le β \le 15°$ and $3° \le γ \le 15°$. When β < 3°, as compared to a conventionally common case where the pin portion is arranged along the axial direction Y of the stud pin (β = 0), a clear advantage cannot be obtained in terms of the driving performance. Further, when γ < 3°, as compared to a conventionally common case where the pin portion is arranged along the axial direction Y of the stud pin (γ = 0), a clear advantage cannot be obtained in terms of the braking performance. Meanwhile, when $15° < β, γ$, since the material of the main body part (generally aluminum) is much softer than the material of the pin portion (generally tungsten carbide), due to abrasion of the body part around the pin portion caused by repeated contact with the ground, the resistance to pin detachment is deteriorated, which is not preferred.

Fig. 10 is a schematic partial development view showing the tread surface of yet another example of the tire of the present invention. The tire tread pattern shown in this figure is the same as the one shown in Fig. 8 and stud pins 10B, whose pin portion 2B has directionality, are arranged at an appropriate pitch on each of the land portions 32b and 32c. In the present invention, in cases where the stud pin 10B whose pin portion has directionality is used, as shown in the figure, it is preferred that the stud pin be arranged on the tread blocks such that the recess side of the pin portion 2B having a V-shape, a circular arc shape or a modified circular arc shape or the side corresponding to the maximum projected length Ld1 of the pin portion 2B in the direction of the symmetry axis D is on the trailing side of the respective blocks. By this, particularly a braking performance-improving effect can be obtained with hardly any reduction in other performances.

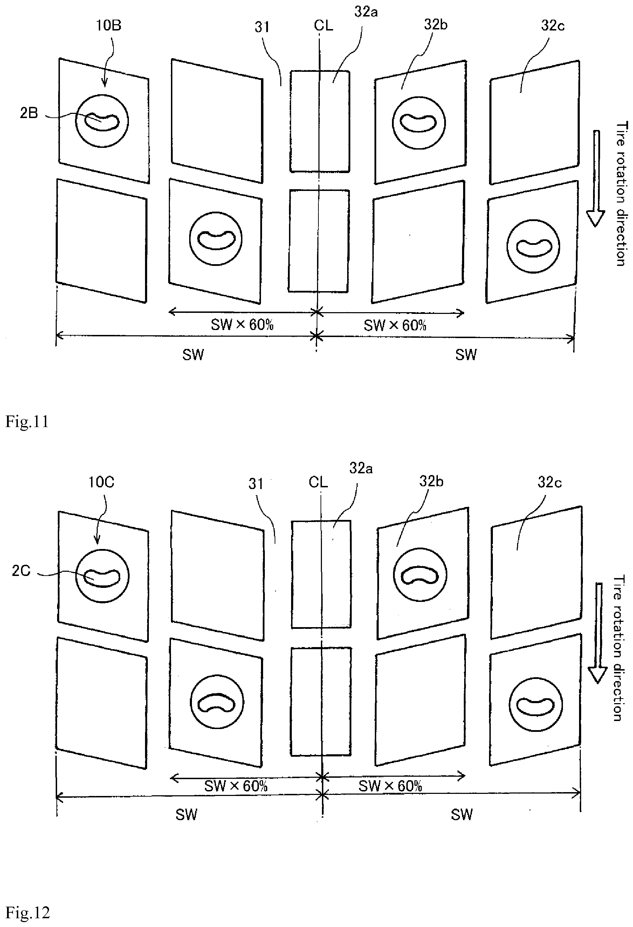

Fig. 11 is a schematic partial development view showing the tread surface of yet another example of the tire of the present invention. The tire tread pattern shown in this figure is the same as the one shown in Fig. 8 and stud pins 10C, whose pin portion 2C has directionality, are arranged at an appropriate pitch on each of the land portions 32b and 32c. In the present invention, in cases where such a stud pin whose pin portion has directionality is used, as shown in the figure, it is also preferred that those stud pins in the region of less than 60% of the half-width SW of the tire-ground contact width from the tire equatorial plane CL be arranged on the tread blocks such that the recess side of the pin portion having a V-shape, a circular arc shape or a modified circular arc shape or the side corresponding to the maximum projected length Ld1 of the pin portion in the direction of the symmetry axis D is on the leading side of the respective blocks. By this, an effect of further improving only the driving performance can be attained with hardly any reduction in the braking performance.

In the tire of the present invention, what is important is only that the above-described stud pin of the present invention is arranged on tread land portions, and this enables to obtain the expected effects of the present invention. The details of other matters, such as the tire structure and the materials of the members, are not particularly restricted. The tire of the present invention is particularly useful as a studdable tire that is suitably used as a winter tire.

EXAMPLES

The present invention will now be described in more detail by way of examples thereof.

In accordance with the conditions shown in Tables below, stud pins each comprising a body part and a pin portion, which body part contained a main body part formed on the side of an end on which the pin portion was arranged in a protruding manner and a flange portion formed on the opposite side of the end on which the pin portion was arranged in a protruding manner, were prepared. In the thus obtained stud pins of Conventional Example, Reference Examples, Examples and Comparative Example, when a symmetry axis of the flange portion that represented the maximum length of the flange portion in the axial direction was defined as longitudinal symmetry axis C and the lengths of the main body part along symmetry axes A and B were defined as La and Lb, respectively, the longitudinal symmetry axis C of the flange portion and the symmetry axis A satisfying $La \geq Lb$ were in substantially the same direction. In addition, in a cross-section perpendicular to the axial direction of each stud pin, the pin portion had such a shape (rectangle) as shown in Fig. 1(e) and, when a symmetry axis of the pin portion that represented the maximum length of the pin portion projected in the direction of the symmetry axis was defined as symmetry axis D, the direction perpendicular to the symmetry axis D of the pin portion and the direction of the longitudinal symmetry axis C of the flange portion intersected with each other at an angle of 90°. Furthermore, the pin portion was fitted into a hole arranged on the main body part.

In accordance with the conditions shown in Tables below, the thus obtained stud pins were each arranged on the tread land portions of a tire having the tread pattern shown in Fig. 7, thereby producing studdable tires having a size of 205/55R16. The thus obtained test tires were each filled with air at an inner pressure of 230 kPa and subjected to performance evaluations as described below. The results thereof are summarized in Tables below.

<Braking Performance Index>

The braking performance was evaluated as follows. On a track having an icy surface, a test driver abruptly braked a vehicle from an initial speed of 20 km/hr, and the braking distance required for bringing the vehicle to rest was measured. The on-ice braking performance of the tire was evaluated based on the thus measured braking distance. Specifically, an index was calculated, taking the braking distance of the tire of Conventional Example 1 as 100. A larger index value indicates superior braking performance on the icy road surface.

<Driving Performance Index>

The driving performance was evaluated as follows. On a track having an icy surface, a test driver abruptly started a vehicle from rest, and the time required for the vehicle to reach a speed of 20 km/hr was measured. Specifically, an index was calculated, taking the time required for the vehicle wearing the tire of Conventional Example 1 to reach this speed as 100. A larger index value indicates superior driving performance on the icy road surface.

\<Stud-off Resistance\>

On public roads having icy/snowy surfaces as well as dry surfaces, a vehicle wearing new tires was driven over a distance of 30,000 km. Then, the number of stud pins detached after the driving was measured and, from the thus obtained number of detached stud pins (A) and the initial number of stud pins (B), the ratio (B/A) was calculated to evaluate the stud-off resistance of each tire. Specifically, an index was calculated taking the ratio (B/A) of the tire of Conventional Example 1 as 100. A larger index value indicates a smaller number of detached stud pins and superior stud-off resistance.

[Table 1]

| | Conventional Example 1 | Reference Example 1 | Reference Example 2 | Reference Example 3 | Reference Example 4 | Reference Example 5 | Reference Example 6 | Reference Example 7 | Reference Example 8 |
|---|---|---|---|---|---|---|---|---|---|
| Flange portion | Fig. 12(a) | Fig. 1 | Fig. 2(a) | Fig. 2(b) | Fig. 2(b) | Fig. 2(b) | Fig. 2(b) | Fig. 2(b) | Fig. 2(b) |
| Shape of flange portion | round | substantially rectangular | trapezoidal | substantially trapezoidal | substantially trapezoidal | substantially trapezoidal | substantially trapezoidal | substantially trapezoidal | substantially trapezoidal |
| $Lc1$ (mm) | 8.2 | 9.0 | 10.0 | 10.0 | 10.0 | 10.0 | 10.0 | 10.0 | 10.0 |
| $Lc2$ (mm) | 8.2 | 7.2 | 8.0 | 8.0 | 8.0 | 8.0 | 8.0 | 8.0 | 8.0 |
| $Lc1/Lc2$ | 1.00 | 1.25 | 1.25 | 1.25 | 1.25 | 1.25 | 1.25 | 1.25 | 1.25 |
| $Lc2max$ (mm) | 8.2 | 7.2 | 8.0 | 8.0 | 8.0 | 8.0 | 8.0 | 8.0 | 8.0 |
| $Lc2min$ (mm) | 8.2 | 7.2 | 5.0 | 5.0 | 5.0 | 5.0 | 5.0 | 5.0 | 5.0 |
| $Lc2max/Lc2min$ | 1.00 | 1.00 | 1.60 | 1.60 | 1.60 | 1.60 | 1.60 | 1.60 | 1.60 |
| Main body part | Fig. 12(a) | Fig. 3(b) | Fig. 3(a) | Fig. 3(b) | Fig. 3(b) | Fig. 3(b) | Fig. 3(b) | Fig. 3(b) | Fig. 3(b) |
| Shape of body part | round | elliptical | substantially rectangular | elliptical | elliptical | elliptical | elliptical | elliptical | elliptical |
| $La$ (mm) | 6.2 | 7.0 | 6.1 | 7.0 | 7.0 | 7.0 | 7.0 | 7.0 | 7.0 |
| $Lb$ (mm) | 6.2 | 5.5 | 4.9 | 5.5 | 5.5 | 5.5 | 5.5 | 5.5 | 5.5 |
| $La/Lb$ | 1.00 | 1.27 | 1.24 | 1.27 | 1.27 | 1.27 | 1.27 | 1.27 | 1.27 |
| Hole position[*1] (SW < 60%) | - | - | - | - | offset | - | offset | offset | offset |
| $L1$ (mm) | - | - | - | - | 1.0 | - | 1.0 | 1.0 | 1.0 |
| $L1/La$ | - | - | - | - | 0.14 | - | 0.14 | 0.14 | 0.14 |
| Hole position[*2] (SW ≥ 60%) | - | - | - | - | - | offset | offset | offset | offset |
| $L2$ (mm) | - | - | - | - | - | 1.0 | 1.0 | 1.0 | 1.0 |
| $L2/La$ | - | - | - | - | - | 0.14 | 0.14 | 0.14 | 0.14 |
| Hole-forming direction[*3] (SW < 60%) | - | - | - | - | - | - | - | - | inclined | - |

EP 2 977 231 B1

(continued)

| | Conventional Example 1 | Reference Example 1 | Reference Example 2 | Reference Example 3 | Reference Example 4 | Reference Example 5 | Reference Example 6 | Reference Example 7 | Reference Example 8 |
|---|---|---|---|---|---|---|---|---|---|
| $\beta$ (degree) | - | - | - | - | - | - | - | 9.0 | - |
| Hole-forming direction*4 (SW $\geq$ 60%) | - | - | - | - | - | - | - | - | inclined |
| $\gamma$ (degree) | - | - | - | - | - | - | - | - | 9.0 |
| On-ice driving performance (index) | 100 | 102 | 103 | 103 | 104 | 103 | 104 | 105 | 104 |
| On-ice braking performance (index) | 100 | 102 | 103 | 103 | 103 | 104 | 104 | 104 | 105 |
| Stud-off resistance (index) | 100 | 101 | 102 | 103 | 105 | 104 | 106 | 108 | 107 |

*1) This indicates that, in those stud pins arranged in the region of less than 60% of the half-width SW of the tire-ground contact width from the tire equatorial plane CL, the opening of the hole was arranged at a position offset from the central axis Q of the main body part toward the leading side by a distance of L1.

*2) This indicates that, in those stud pins arranged in the region away from the tire equatorial plane CL by 60% or more of the half-width SW of the tire-ground contact width, the opening of the hole was arranged at a position offset from the central axis Q of the main body part toward the trailing side by a distance of L2.

*3) This indicates that, in those stud pins arranged in the region of less than 60% of the half-width SW of the tire-ground contact width from the tire equatorial plane CL, the hole-forming direction was inclined at an angle $\beta$ with respect to the axial direction of each stud pin such that the opening of the hole was offset toward the leading side.

*4) This indicates that, in those stud pins arranged in the region away from the tire equatorial plane CL by 60% or more of the half-width SW of the tire-ground contact width, the hole-forming direction was inclined at an angle $\gamma$ with respect to the axial direction of each stud pin such that the opening of the hole was offset toward the trailing side.

[Table 2]

| | Reference Example 9 | Reference Example 10 | Reference Example 11 | Reference Example 12 | Reference Example 13 | Reference Example 14 | Reference Example 15 | Reference Example 16 | Reference Example 17 |
|---|---|---|---|---|---|---|---|---|---|
| Flange portion | Fig. 2(b) | Fig. 2(b) | Fig. 2(b) | Fig. 2(b) | Fig. 2(b) | Fig. 2(b) | Fig. 2(b) | Fig. 2(b) | Fig. 2(b) |
| Shape of flange portion | substantially trapezoidal | substantially trapezoidal | substantially trapezoidal | substantially trapezoidal | substantially trapezoidal | substantially trapezoidal | substantially trapezoidal | substantially trapezoidal | substantially trapezoidal |
| Lc1 (mm) | 10.0 | 9.8 | 8.9 | 10.0 | 10.0 | 10.0 | 10.0 | 10.0 | 10.0 |
| Lc2 (mm) | 8.0 | 7.8 | 8.1 | 8.0 | 6.7 | 8.0 | 8.0 | 8.0 | 8.0 |
| Lc1/Lc2 | 1.25 | 1.26 | 1.10 | 1.25 | 1.49 | 1.25 | 1.25 | 1.25 | 1.25 |
| Lc2max (mm) | 8.0 | 7.8 | 8.1 | 8.0 | 6.7 | 8.0 | 8.0 | 8.0 | 8.0 |
| Lc2min (mm) | 5.0 | 7.0 | 5.0 | 4.0 | 4.5 | 5.0 | 5.0 | 5.0 | 5.0 |
| Lc2max/Lc2min | 1.60 | 1.11 | 1.62 | 2.00 | 1.49 | 1.60 | 1.60 | 1.60 | 1.60 |
| Main body part | Fig. 3(b) | Fig. 3(b) | Fig. 3(b) | Fig. 3(b) | Fig. 3(b) | Fig. 3(b) | Fig. 3(b) | Fig. 3(b) | Fig. 3(b) |
| Shape of body part | elliptical | elliptical | elliptical | elliptical | elliptical | elliptical | elliptical | elliptical | elliptical |
| La (mm) | 7.0 | 7.0 | 7.0 | 7.0 | 7.0 | 6.8 | 7.6 | 7.0 | 7.0 |
| Lb (mm) | 5.5 | 5.5 | 5.5 | 5.5 | 5.5 | 6.2 | 5.1 | 5.5 | 5.5 |
| La/Lb | 1.27 | 1.27 | 1.27 | 1.27 | 1.27 | 1.10 | 1.49 | 1.27 | 1.27 |
| Hole position[*1] (SW < 60%) | offset | - | - | - | - | - | - | offset | offset |
| L1 (mm) | 1.0 | - | - | - | - | - | - | 1.8 | 1.0 |
| L1/La | 0.14 | - | - | - | - | - | - | 0.26 | 0.14 |
| Hole position[*2] (SW ≥ 60%) | offset | - | - | - | - | - | - | offset | offset |
| L2 (mm) | 1.0 | - | - | - | - | - | - | 1.0 | 1.8 |
| L2/La | 0.14 | - | - | - | - | - | - | 0.14 | 0.26 |
| Hole-forming direction[*3] (SW < 60%) | inclined | - | - | - | - | - | - | inclined | inclined |

EP 2 977 231 B1

13

| | Reference Example 9 | Reference Example 10 | Reference Example 11 | Reference Example 12 | Reference Example 13 | Reference Example 14 | Reference Example 15 | Reference Example 16 | Reference Example 17 |
|---|---|---|---|---|---|---|---|---|---|
| β (degree) | 9.0 | - | - | - | - | - | - | 9.0 | 9.0 |
| Hole-forming direction[*4] (SW ≥ 60%) | inclined | - | - | - | - | - | - | inclined | inclined |
| γ (degree) | 9.0 | - | - | - | - | - | - | 9.0 | 9.0 |
| On-ice driving performance (index) | 105 | 103 | 103 | 103 | 103 | 103 | 103 | 100 | 103 |
| On-ice braking performance (index) | 105 | 103 | 103 | 103 | 103 | 103 | 103 | 103 | 100 |
| Stud-off resistance (index) | 109 | 100 | 100 | 100 | 100 | 100 | 100 | 103 | 103 |

[Table 3]

| | Reference Example 18 | Reference Example 19 | Reference Example 20 | Comparative Example 1 | Reference Example 21 | Reference Example 22 | Reference Example 23 | Reference Example 24 |
|---|---|---|---|---|---|---|---|---|
| Flange portion | Fig. 2(b) | Fig. 2(b) | Fig. 2(b) | Fig. 2(b) | Fig. 2(b) | Fig. 2(b) | Fig. 2(b) | Fig. 2(b) |
| Shape of flange portion | substantially trapezoidal | substantially trapezoidal | substantially trapezoidal | substantially trapezoidal | substantially trapezoidal | substantially trapezoidal | substantially trapezoidal | substantially trapezoidal |
| Lc1 (mm) | 10.0 | 10.0 | 9.6 | 8.4 | 10.0 | 10.0 | 10.0 | 10.0 |
| Lc2 (mm) | 8.0 | 8.0 | 7.6 | 8.4 | 8.0 | 6.6 | 8.0 | 8.0 |
| Lc1/Lc2 | 1.25 | 1.25 | 1.26 | 1.00 | 1.25 | 1.52 | 1.25 | 1.25 |
| Lc2max (mm) | 8.0 | 8.0 | 7.6 | 8.4 | 8.0 | 6.6 | 8.0 | 8.0 |
| Lc2min (mm) | 5.0 | 5.0 | 7.6 | 5.3 | 3.9 | 4.5 | 5.0 | 5.0 |
| Lc2max/Lc2min | 1.60 | 1.60 | 1.00 | 1.58 | 2.05 | 1.47 | 1.60 | 1.60 |
| Main body part | Fig. 3(b) | Fig. 3(b) | Fig. 3(b) | Fig. 3(b) | Fig. 3(b) | Fig. 3(b) | Fig. 3(b) | Fig. 3(b) |
| Shape of body part | elliptical | elliptical | elliptical | elliptical | elliptical | elliptical | elliptical | elliptical |
| La (mm) | 7.0 | 7.0 | 7.0 | 7.0 | 7.0 | 7.0 | 6.5 | 7.6 |
| Lb (mm) | 5.5 | 5.5 | 5.5 | 5.5 | 5.5 | 5.5 | 6.5 | 5.0 |
| La/Lb | 1.27 | 1.27 | 1.27 | 1.27 | 1.27 | 1.27 | 1.00 | 1.52 |
| Hole position*1 (SW < 60%) | offset | offset | - | - | - | - | - | - |
| L1(mm) | 1.0 | 1.0 | - | - | - | - | - | - |
| L1/La | 0.14 | 0.14 | - | - | - | - | - | - |
| Hole position*2 (SW ≥ 60%) | offset | offset | - | - | - | - | - | - |
| L2 (mm) | 1.0 | 1.0 | - | - | - | - | - | - |
| L2/La | 0.14 | 0.14 | - | - | - | - | - | - |
| Hole-forming direction*3 (SW < 60%) | inclined | inclined | - | - | - | - | - | - |

| | Reference Example 18 | Reference Example 19 | Reference Example 20 | Comparative Example 1 | Reference Example 21 | Reference Example 22 | Reference Example 23 | Reference Example 24 |
|---|---|---|---|---|---|---|---|---|
| $\beta$ (degree) | 15.0 | 9.0 | - | - | - | - | - | - |
| Hole-forming direction[*4] (SW$\geq$60%) | inclined | inclined | - | - | - | - | - | - |
| $\gamma$ (degree) | 9.0 | 15.0 | - | - | - | - | - | - |
| On-ice driving performance (index) | 100 | 103 | 103 | 101 | 103 | 103 | 103 | 103 |
| On-ice braking performance (index) | 103 | 100 | 103 | 102 | 103 | 103 | 103 | 103 |
| Stud-off resistance (index) | 103 | 103 | 99 | 99 | 99 | 99 | 99 | 99 |

EP 2 977 231 B1

In accordance with the conditions shown in Tables below, stud pins each comprising a body part and a pin portion, which body part contained a main body part formed on the side of an end on which the pin portion was arranged in a protruding manner and a flange portion formed on the opposite side of the end on which the pin portion was arranged in a protruding manner, were prepared. In the thus obtained stud pins of Conventional Example, Reference Examples, Examples and Comparative Example, the main body part and the flange portion were the same as those in the above-described Reference Example 3. In addition, when a symmetry axis of the pin portion that represented the maximum length of the pin portion projected in the direction of the symmetry axis was defined as symmetry axis D, the direction perpendicular to the symmetry axis D of the pin portion and the direction of the longitudinal symmetry axis C of the flange portion intersected with each other at an angle of 90°. Moreover, on the end surface of the pin portion in the axial direction of each stud pin, one groove running thereacross was formed in the center of the maximum projected length Ld1 along the direction of the symmetry axis D. Furthermore, the pin portion was fitted into a hole arranged on the main body part.

In accordance with the conditions shown in Tables below, the thus obtained stud pins were each arranged on the tread land portions of a tire to produce studdable tires having a size of 205/55R16. The thus obtained test tires were each filled with air at an inner pressure of 230 kPa and subjected to performance evaluations in the same manner as described above, except that the tire of Reference Example 25 was used as a reference. The results thereof are summarized in Tables below.

[Table 4]

| | | Reference Example 25 | Example 26 | Example 27 | Example 28 | Example 29 | Example 30 | Example 31 | Reference Example 32 | Reference Example 33 | Reference Example 34 | Reference Example 35 |
|---|---|---|---|---|---|---|---|---|---|---|---|---|
| Pin cross-section | Corresponding figure | Fig. 12(b) | Fig.5(d) | Fig. 5(e) | Fig. 5(f) | Fig. 5(g) | Fig. 5(h) | Fig. 5(i) | Fig. 5(a) | Fig. 5(b) | Fig. 5(c) | Fig. 5(c) |
| | Shape | rhomboidal | elliptical | modified elliptical | isosceles triangular | semi-elliptical | round dumbbell shape | polygonal dumbbell shape | V-shape | circular arc | modified circular arc | modified circular arc |
| Figure showing stud arrangement | | - | - | Fig. 10 | Fig. 10 | Fig. 10 | Fig. 10 | Fig. 10 | Fig. 10 | Fig. 10 | Fig. 10 | Fig. 11 |
| Ld1 (mm) | | 2.40 | 2.80 | 2.80 | 3.20 | 3.20 | 2.80 | 2.80 | 3.20 | 3.20 | 3.20 | 3.20 |
| Ld2 (mm) | | 2.40 | 1.30 | 1.30 | 1.50 | 1.50 | 1.30 | 1.30 | 1.50 | 1.50 | 1.50 | 1.50 |
| Ld1/Ld2 | | 1.00 | 2.15 | 2.15 | 2.13 | 2.13 | 2.15 | 2.15 | 2.13 | 2.13 | 2.13 | 2.13 |
| Ld3 (mm) | | - | - | - | - | - | - | - | 0.80 | 0.80 | 0.80 | 0.80 |
| Ld3/Ld1 | | - | - | - | - | - | - | - | 0.25 | 0.25 | 0.25 | 0.25 |
| Ld4 (mm) | | - | 0.40 | 0.40 | 0.40 | 0.40 | 0.40 | 0.40 | - | - | - | - |
| Ld4/Ld1 | | - | 0.14 | 0.14 | 0.13 | 0.13 | 0.14 | 0.14 | - | - | - | - |
| On-ice driving performance (index) | | 100 | 102 | 102 | 102 | 102 | 102 | 102 | 103 | 103 | 103 | 104 |
| On-ice braking performance (index) | | 100 | 101 | 102 | 102 | 102 | 101 | 101 | 105 | 105 | 105 | 105 |

EP 2 977 231 B1

[Table 5]

| | | Reference Example 36 | Reference Example 37 | Reference Example 38 | Reference Example 39 | Example 40 | Example 41 | Reference Example 42 | Reference Example 43 | Reference Example 44 | Reference Example 45 | Reference Example 46 |
|---|---|---|---|---|---|---|---|---|---|---|---|---|
| Pin cross-section | Corresponding figure | Fig. 5(c) | Fig. 5(c) | Fig. 5(c) | Fig. 5(c) | Fig. 5(c) | Fig. 5(c) | Fig. 5(c) | Fig. 5(c) | Fig. 5(c) | Fig. 5(c) | Fig. 5(c) |
| | Shape | modified circular arc | modified circular arc | modified circular arc | modified circular arc | modified circular arc | modified circular arc | modified circular arc | modified circular arc | modified circular arc | modified circular arc | modified circular arc |
| Figure showing stud arrangement | | Fig. 11 | Fig. 11 | Fig. 11 | Fig. 11 | Fig. 11 | Fig. 11 | Fig. 11 | Fig. 11 | Fig. 11 | Fig. 11 | Fig. 13 |
| Ld1 (mm) | | 2.70 | 3.40 | 3.20 | 3.40 | 3.20 | 3.20 | 2.60 | 3.40 | 3.20 | 3.40 | 2.70 |
| Ld2 (mm) | | 2.60 | 1.15 | 1.50 | 1.75 | 1.50 | 1.50 | 2.60 | 1.10 | 1.50 | 1.75 | 2.60 |
| Ld1/Ld2 | | 1.04 | 2.96 | 2.13 | 1.94 | 2.13 | 2.13 | 1.00 | 3.09 | 2.13 | 1.94 | 1.04 |
| Ld3 (mm) | | 0.80 | 0.80 | 0.35 | 1.35 | 0.80 | 0.80 | 0.80 | 0.80 | 0.30 | 1.40 | 0.80 |
| Ld3/Ld1 | | 0.30 | 0.24 | 0.11 | 0.40 | 0.25 | 0.25 | 0.31 | 0.24 | 0.09 | 0.41 | 0.30 |
| Ld4 (mm) | | - | - | - | - | 0.40 | 0.90 | - | - | - | - | - |
| Ld4/Ld1 | | - | - | - | - | 0.13 | 0.28 | - | - | - | - | - |
| On-ice driving performance (index) | | 100 | 101 | 100 | 101 | 106 | 105 | 99 | 100 | 99 | 100 | 99 |
| On-ice braking performance (index) | | 101 | 100 | 101 | 100 | 107 | 106 | 100 | 99 | 100 | 99 | 100 |

EP 2 977 231 B1

As shown in Tables above, it was confirmed that the driving and braking performances on icy and snowy road surfaces as well as stud-off resistance were all improved in the stud pins and tires of Examples in which the cross-sectional shapes of the main body part and flange portion satisfied the conditions of the present invention. In addition, it was also confirmed that the on-ice performances can be further improved by optimizing the conditions of the pin portion.

DESCRIPTION OF SYMBOLS

| 1, 1a, 1b: | Body part |
|---|---|
| 2, 2a, 2b, 2B, 2C, 2D: | Pin portion |
| 3, 3a, 3b, 3A, 3D: | Main body part |
| 4, 4a, 4A, 4D: | Flange portion |
| 5, 5a: | Groove |
| 6, 6A: | Hole |
| 7: | Insertion part |
| 10, 10A, 10B, 10C, 10D: | Stud pin |
| 2A: | Recess |
| 21, 31: | Groove |
| 22a to 22c, 32a to 32c: | Land portion |

**Claims**

1.  A stud pin (10) for a tire, which is arranged on the surface of a tire tread, said stud pin (10) comprising:

    a body part (1) which is embedded in said tire tread; and
    a pin portion (2) which is arranged in a protruding manner on one end of said body part (1) and protrudes from the surface of said tire tread,
    said body part comprising: a main body part (3) formed on the side of said end on which said pin portion (2) is arranged in a protruding manner; and a flange portion (4) formed on the opposite side of said end on which said pin portion (2) is arranged in a protruding manner,
    wherein,
    in a cross-section perpendicular to the axial direction of said stud pin (10), said main body part (3) assumes a line-symmetrical shape having two symmetry axes A and B that are perpendicular to each other,
    said flange portion (4) assumes a line-symmetrical shape having at least one symmetry axis,
    when a symmetry axis of said flange portion (4) that represents a maximum length of said flange portion (4) in said axial direction is defined as longitudinal symmetry axis C, said maximum length of said flange portion (4) in the direction perpendicular to said longitudinal symmetry axis C is shorter than the length of said flange portion (4) along said longitudinal symmetry axis C, and
    when the lengths of said main body part (3) on said symmetry axes A and B of said main body part (3) are defined as La and Lb, respectively, said symmetry axis A satisfying La $\geq$ Lb and said longitudinal symmetry axis C of said flange portion (4) are in substantially the same direction,
    **characterized in that**, on the end surface of said pin portion (2) in said axial direction of said stud pin (10), at least one groove (5) running thereacross is formed.

2.  The stud pin (10) according to claim 1, wherein
    in a cross-section perpendicular to said axial direction of said stud pin (10), said pin portion (2) assumes a line-symmetrical shape having at least one symmetry axis, and
    when a symmetry axis of said pin portion (2) that represents a maximum length of said pin portion (2) projected in the direction of said symmetry axis is defined as symmetry axis D, the direction perpendicular to said symmetry axis D of said pin portion (2) and the direction of said longitudinal symmetry axis C of said flange portion (4) intersect with each other.

3.  The stud pin (10) according to claim 1, wherein
    said pin portion (2) is fitted into a hole (6) arranged on said main body part (3), and
    the opening of said hole (6) is formed at a position offset from the central axis of said main body part (3).

**4.** The stud pin (10) according to claim 1, wherein
said pin portion (2) is fitted into a hole (6) arranged on said main body part (3), and
the formation direction of said hole (6) is inclined with respect to said axial direction of said stud pin (10).

**5.** A tire, comprising the stud pin (10) according to claim 1 arranged on tread land portions (22a,22b,22c,32a,32b,32c).

**Patentansprüche**

**1.** Spikestift (10) für einen Reifen, welcher auf der Oberfläche einer Reifenlauffläche angeordnet ist, wobei der Spikestift (10) umfasst:

einen Körperteil (1), welcher in der Reifenlauffläche eingebettet ist; und
einen Stiftabschnitt (2), welcher an einem Ende des Körperteils (1) vorstehend angeordnet ist und von der Oberfläche der Lauffläche vorsteht,
wobei der Körperteil umfasst: einen Hauptkörperteil (3), welcher auf einer Seite des einen Endes gebildet ist, auf welchem der Stiftabschnitt (2) vorstehend angeordnet ist; und einen Flanschabschnitt (4), welcher auf der dem einen Ende gegenüberliegenden Seite gebildet ist, an welcher der Stiftabschnitt (2) vorstehend angeordnet ist,
wobei,
in einem Querschnitt, welcher zur axialen Richtung de Spikestifts (10) senkrecht steht, der Hauptkörperteil (3) eine liniensymmetrische Form annimmt, welche zwei Symmetrieachsen A und B aufweist, welche zueinander senkrecht stehen,
wobei der Flanschabschnitt (4) eine liniensymmetrische Form annimmt, welche zumindest eine Symmetrieachse aufweist,
wenn eine Symmetrieachse des Flanschabschnitts (4), welche die maximale Länge des Flanschabschnitts (4) in der axialen Richtung darstellt, als Längssymmetrieachse C definiert ist, die maximale Länge des Flanschabschnitts (4) in der zur Längssymmetrieachse C senkrechten Richtung kürzer als die Länge des Flanschabschnitts (4) entlang der Längssymmetrieachse C ist, und
wenn die Längen des Hauptkörperteils (3) auf den Symmetrieachsen A und B des Hauptkörperteils (3) jeweils als La und Lb definiert sind, die Symmetrieachse A, welche La ≥ Lb erfüllt, und die Längssymmetrieachse C des Flanschabschnitts (4) im Wesentlichen in derselben Richtung gerichtet sind,
**dadurch gekennzeichnet, dass** auf der Endfläche des Stiftabschnitts (2), in der axialen Richtung des Spikestifts (10), zumindest eine Rille (5) gebildet ist, welche sich über dieselbe erstreckt.

**2.** Spikestift (10) nach Anspruch 1, wobei
in einem Querschnitt, welcher zur axialen Richtung des Spikestifts (10) senkrecht steht, der Stiftabschnitt (2) eine liniensymmetrische Form annimmt, welche zumindest eine Symmetrieachse aufweist, und
wenn eine Symmetrieachse des Stiftabschnitts (2), welche die maximale Länge des Stiftabschnitts (2) darstellt, projiziert in der Richtung der Symmetrieachse, als Symmetrieachse D definiert ist, die zur Symmetrieachse D senkrechte Richtung des Stiftabschnitts (2) und die Richtung der Längssymmetrieachse C des Flanschabschnitts (4) einander schneiden.

**3.** Spikestift (10) nach Anspruch 1, wobei
der Stiftabschnitt (2) in ein Loch (6) eingesetzt ist, welches auf dem Hauptkörperteil (3) angeordnet ist, und
die Öffnung des Lochs (6) an einer Stelle gebildet ist, welche von der Mittelachse des Hauptkörperteils (3) versetzt ist.

**4.** Spikestift (10) nach Anspruch 1, wobei
der Stiftabschnitt (2) in ein Loch (6) eingesetzt ist, welches auf dem Hauptkörperteil (3) angeordnet ist, und
die Bildungsrichtung des Lochs (6) gegenüber der axialen Richtung des Spikestifts (10) geneigt ist.

**5.** Reifen, umfassend den Spikestift (10) nach Anspruch 1, welcher an Laufflächenstegabschnitten (22a, 22b, 22c, 32a, 32b, 32c) angeordnet ist.

**Revendications**

**1.** Tige de crampon (10) pour un bandage pneumatique, agencée sur la surface d'une bande de roulement du bandage pneumatique, ladite tige de crampon (10) comprenant :

une partie de corps (1) noyée dans ladite bande de roulement du bandage pneumatique ; et
une partie de tige (2) agencée d'une manière à déborder sur une extrémité de ladite partie de corps (1) et débordant de la surface de ladite bande de roulement du bandage pneumatique ;
ladite partie de corps comprenant une partie de corps principale (3) formée sur le côté de ladite extrémité sur laquelle ladite partie de tige (2) est agencée d'une manière à déborder; et une partie de bride (4) formée sur le côté opposé de ladite extrémité, sur lequel est agencée ladite partie de tige (2) d'une manière à déborder;
dans laquelle :

dans une section transversale perpendiculaire à la direction axiale de ladite tige de crampon (10), ladite partie de corps principale (3) assume une forme à symétrie axiale comportant deux axes de A et B perpendiculaires l'un à l'autre ;
ladite partie de bride (4) assumant une forme à symétrie axiale comportant au moins un axe de symétrie ;
lorsqu'un axe de symétrie de ladite partie de bride (4), représentant une longueur maximale de ladite partie de bride (4) dans ladite direction axiale est défini comme axe de symétrie longitudinal C, ladite longueur maximale de ladite partie de bride (4), dans la direction perpendiculaire audit axe de symétrie longitudinal C, est plus courte que la longueur de ladite partie de bride (4) le long dudit axe de symétrie longitudinal C ; et
lorsque les longueurs de ladite partie de corps principale (3) sur lesdits axes de symétrie A et B de ladite partie de corps principale (3) sont définies respectivement comme La et Lb, ledit axe de symétrie A satisfaisant La ≥ Lb, et ledit axe de symétrie longitudinal C de ladite partie de bride (4) se situent sensiblement dans la même direction,
**caractérisée en ce que**, sur la surface d'extrémité de ladite partie de tige (2), dans ladite direction axiale de ladite tige de crampon (10), au moins une rainure (5) est formée, s'étendant à travers celle-ci.

2. Tige de crampon (10) selon la revendication 1, dans laquelle :

dans une section transversale perpendiculaire à ladite direction axiale de ladite tige de crampon (10), ladite partie de tige (2) assume une forme à symétrie axiale comportant au moins un axe de symétrie ; et
lorsqu'un axe de symétrie de ladite partie de tige (2), représentant une longueur maximale de ladite partie de tige (2), débordant dans la direction dudit axe de symétrie est défini comme axe de symétrie D, la direction perpendiculaire audit axe de symétrie D de ladite partie de tige (2) et la direction dudit axe de symétrie longitudinal C de ladite partie de bride (4) se coupent mutuellement.

3. Tige de crampon (10) selon la revendication 1, dans laquelle :

ladite partie de tige (2) est ajustée dans un trou (6) formé sur ladite partie de corps principale (3) ; et
l'ouverture dudit trou (6) est formée au niveau d'une position décalée de l'axe central de ladite partie de corps principale (3).

4. Tige de crampon (10) selon la revendication 1, dans laquelle :

ladite partie de tige (2) est ajustée dans un trou (6) formé sur ladite partie de corps principale (3) ; et
la direction de formation dudit trou (6) est inclinée par rapport à ladite direction axiale de ladite tige de crampon (10).

5. Bandage pneumatique, comprenant la tige de crampon (10) selon la revendication 1, agencée sur des parties d'appui de la bande de roulement (22a, 22b, 22c, 32a, 32b, 32c).

Fig.1

(a)

(b)

(c)

(d)

(e)

(f)

Fig.2

(a)

(b)

(c)

Fig.3

(a)                              (b)

A                                A

B                                B

Fig.4

(a)                              (b)                    5a

C                                                 2a
D                              2                   3a } 1a
                          3 } 1                    4a
                          4

Fig.5

(a)

Ld1

D

Ld2

Ld3

2A

D

(b)

D

Ld3

D

(c)

D

Ld3

(d)

D

(e)

D

(f)

D

(g)

D

(h)

D

(i)

D

(j)

D

Ld3

Fig.6

(a)

1b

4b   3b

6

Q

Z

(b)

6   Y

α

3b

4b

1b

(c)

5b

2b

7

Fig.7

21   CL   22a   22b   22c

10

Fig.8

10A   6A   CL   32a   31   32b   32c

4A

3A

Trailing side

Leading side

Tire rotation direction

SW × 60%   SW × 60%

SW   SW

Fig.9

(a)   3A   A   Q   L1   La   β   Y   4A   6A   6A

(b)   3A   A   6A   Q   Y   γ   La   L2   4A

Fig.10

Fig.11

Fig.12

EP 2 977 231 B1

(a)

Ld2

Ld1

(b)

Ld2

Ld1

Fig.13

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012004452 A
- WO 2005049341 A
- EP 1199193 A
- US 20040231775 A
- FI 68863 A
- JP 4088055 B
- JP 2002120517 A